# EUROPEAN PATENT SPECIFICATION

(11) **EP 1 547 399 B1**
(45) Date of publication and mention of the grant of the patent: **20.06.2012**
(21) Application number: 03798967.0
(22) Date of filing: 17.09.2003
(51) Int. Cl.: H04Q 1/14

(54) **FILTER SYSTEMS FOR BROADBAND TELECOMMUNICATION FACILITIES**
FILTERSYSTEME FÜR BREITBAND-TELEKOMMUNIKATIONSEINRICHTUNGEN
SYSTEMES DE FILTRES POUR INSTALLATIONS DE TELECOMMUNICATION A LARGE BANDE

(30) Priority: 03.10.2002 ES 200202265; 11.06.2003 ES 200301379
(43) Date of publication of application: 29.06.2005
(73) Proprietor: Tyco Electronics Raychem S.A., 28108 Alcobendas Madrid (ES)
(72) Inventor: ARIAS, Juan, Tomas, 28100 Alcobendas Madrid (ES)
(74) Representative: Coghlan, Judith Elizabeth Kensy
(86) International application number: PCT/GB2003/004027
(87) International publication number: WO 2004/032533

(56) References cited:
- WO-A-00/76178
- WO-A-01/45452
- WO-A-02/069455
- WO-A-03/030307
- US-A1- 2002 106 075

## Description

The present invention relates to signal transmission apparatus with electric filters for broadband telecommunication facilities.

To provide a high-speed data transmission service, for example over ADSL (asynchronous digital subscriber line) or in general xDSL systems, it is necessary at different stages to combine and to segregate the voice signal, sent by the switching exchange, and the high-speed xDSL data signal, provided by the digital subscriber line access multiplexer (DSLAM). Such combination and segregation of the voice and data signals is effected by means of a filter (sometimes referred to as a splitter), that adds or segregates the signals on their way to or from the subscriber.

The filter serving to combine or segregate the voice and high-speed data signals is often installed jointly with the DSLAM. Given the high price of the combined DSLAM and filter equipment and the double wiring that it is necessary to run between the DSLAM and the intermediate distribution frame, some operators have opted for the separate purchase of the different components, installing filters and DSLAM in different cubicles. In general cards are used which carry multiple filters, that is for several lines or accesses, as described for example in WO-A-00/76178. These cards have the drawback that when a fault occurs in one of the lines it is necessary to replace the entire card, which signifies a high maintenance cost and disrupts the operation of all the lines on that card.

It is an objective of the present invention to provide a more convenient connection architecture or installation for broadband connections, wherein the filters are installed separately from the DSLAM, but not in separate cubicles as in the known systems.

In the installations described in WO-A-02/069455, the filters are installed on a multiple-contact connector strip (8) having a data input (10), a voice input (11), and a combined voice/data output (12), in the area of the actual distribution frames. The installation with electric filters for broadband connections according to the present invention is thus seen as advantageous over the previously known state of the art described in German Utility Model DE-U-20104605, wherein the installation consists of a connection block that has an upper cover and another lower one both designed for the guidance of the cables, presenting frontally two rows of contact pairs of 10 pairs per row. On the inside of the assembly is arranged a filter card carrying all of the filters, in total four, for the four lines that can be connected. The connection block has a series of contact pairs thereon distributed in two rows of 10 contact pairs per row, some of said pairs being employed for the connection to ground. It offers two contact pairs per line to which the combined signal is connected.

The installation of DE-U-20104605 presents several drawbacks. Its filter card is inside the connection block, so that in the event of a line fault requiring replacement of the filter, it is inconveniently necessary to open the connection block to gain access to the card. Also, the fact that this single card carries the filters of several lines means that all of the good filters must be replaced at the same time as the faulty filter. Moreover the filters of DE-U-20104605 have no means of protection against over-voltages and over-currents. A further defect of the configuration described in DE-U-20104605 is that its connection block does not allow optimum use of space, since the 10 contact pairs provided can connect a total of only four lines.

The configuration now proposed according to the present invention is intended to address some or all of the above disadvantages and is defined in claim 1 appended hereto. The invention uses connection blocks having pairs of contacts, one pair for each of the usual wire pairs over which the various signals are transmitted, as know per se. The claim terms "intermediate distribution frame" and "vertical connection block" are well understood by those familiar with this field of telecommunications technology. Preferably, an individual filter is provided for use by each respective individual line or access, which facilitates and reduces the cost of the maintenance, and does not significantly increase the space occupied in the intermediate distribution frame. It is additionally preferred that the constructional characteristics of the filters, as well as of the connection blocks of the intermediate distribution frame, be improved to allow a better use of the space, and to offer a point of manual access. It is furthermore preferred that each of the individual filters carries its own means of protection against over-voltages or over-currents.

The distribution of the contact pairs on the connection block is preferably such that, in each four pairs, two pairs arc arranged in an upper row and the other two pairs on the lower row and in correspondence, one of the upper pairs is used for the voice signal and the other for the high-speed xDSL data signal, while one of the lower pairs is used for the combined voice/data signal and the other is the aforementioned free pair, to which different uses can be allocated.

This distribution of the contact pairs on the connection block of the intermediate distribution frame achieves maximum benefit from said block. When there is an odd number of contact pairs on the connection block, it may advantageously be supplemented with an adjoining connection block having the same odd number of pairs, each pair co-operating with that immediately opposite in the adjoining connection block.

The facility according to the present invention accordingly may be arranged to allow a connection block on the intermediate distribution frame to connect a total of 5 lines; and/or to leave one or more of the contact pairs free to serve as a contact for metallic access or as manual access to take said signal to the test desk; and/or to allow the filters on the connection block of the intermediate distribution frame to be replaced individually; and/or to provide the individual filters with means of protection against over-voltages and over-currents.

Moreover, the configuration of the wiring of the connection blocks in the intermediate distribution frames according to preferred aspects of the present invention may be arranged to allow an optimisation of the contact pairs, and to leave a pair of free contacts per line, to which can be allocated different uses, such as serving for grounding or serving as contact for metallic access and/or connection to a test desk. The pair of contacts that is free can be wired to a test desk with the object of enabling automatic supervision of the state of the lines. In further preferred embodiments of the invention, the filters themselves may have some test points that allow access in a manual way to any one of the three signals, voice, data, or combined voice and data, in addition to the possible use of the free pairs.

Specific embodiments of the present invention will now be described by way of illustration and not restrictively, with reference to the accompanying drawings, wherein:
Figure 1 shows a conventional "Prior Art" installation for xDSL networks,
Figure 2 shows a connection block and filter for the present invention,
Figure 3 shows the configuration presented by the connection block of the intermediate distribution frame,
Figure 4 shows the configuration of the wiring for broadband networks with the filters which are the subject of the invention,
Figure 5 shows a representation of a possible multi-filter module, and
Figure 6 shows a representation in which, by means of a metal access block, there is access to the voice, data and combined signals, and the possible use of the free pair, for subsequent automatic checking of the latter.

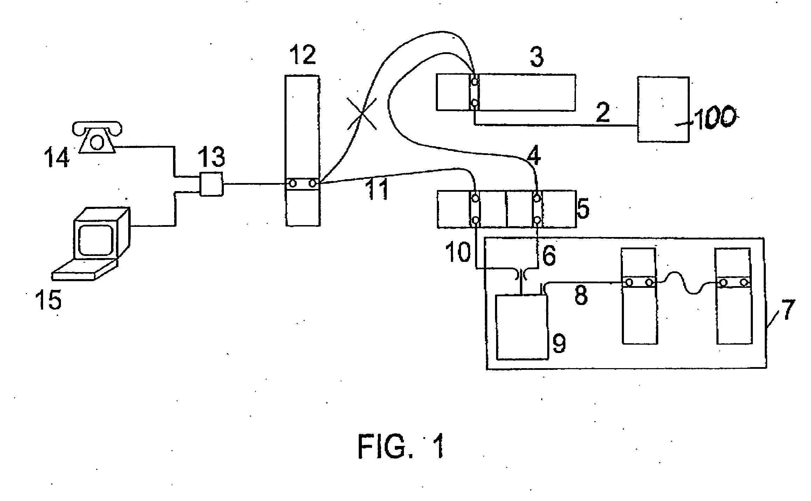

In the known facility shown in figure 1, it is observed how from the switching exchange (100) the voice signal (2) is furnished, which reaches the horizontal connection block (3) and continues to the intermediate distribution frame (5), by means of a voice jumper (4), continuing later, by means of a cable (6) until arriving at the filter (9) which serves to combine or segregate the voice signal (2) and the high-speed xDSL signal (8) provided by the digital subscriber line access multiplexer (DSLAM) (7), from a network, the combined signal (10) being obtained which is taken once again to the intermediate distribution frame (5), that then continues to the vertical connection block (12), by means of a jumper (11). From said vertical connection block (12) the combined signal passes through a filter (13) wherein the voice signal is segregated from the high-speed xDSL signal, terminating either in the telephone set (14) or in the computer (15). It is observed that the filter (9), forms an assembly, remote from the intermediate distribution frame (5).

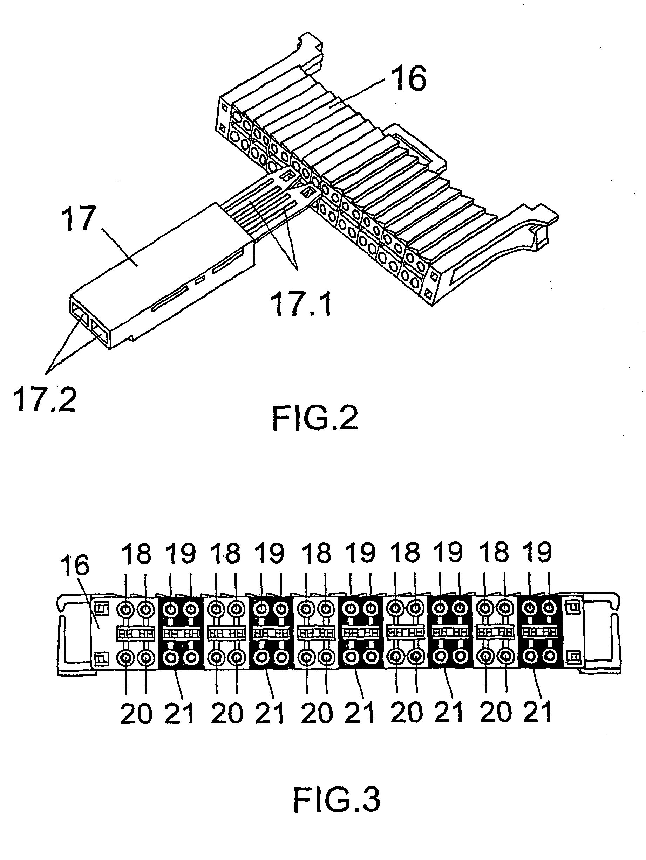

Now, according to the present invention, and with the objective of achieving an installation in which the filter (9) is installed separately from the DSLAM (7) and in an individual manner, and wherein the drawbacks of previously known arrangements are addressed, filters and a wiring configuration of the connection blocks on the intermediate distribution frame have been developed as shown in figures 2 and 3.

In figure 2 a filter (17) is shown of individual use for each of the lines, which is mounted in a form external to the connection block (16) of the intermediate distribution frame, and which has a series of contacts (17.1) arranged so that they fit in the openings of filter-receiving contacts connecting to the voice signal, the combined voice plus data signa, the data signal and the possible use of the free pairs. Said filters have on their inside, the means necessary for their protection against over-voltages and over-currents.

In figure 3, the arrangement is shown of the contact pairs on the connection block (16) of the intermediate distribution frame (5), with the object of achieving maximum benefit from the pairs of said connection block (16). The pairs are arranged in two rows each of ten pairs of contacts, using two pairs of the upper row and the two facing pairs of the lower row for a same line. Observe thus that the pairs (18) and (19) are used respectively for the voice signal and the high-speed xDSL data signal. On the lower part and arranged opposite, the pair (20) is used for the combined voice plus data signal, while the pair (21) is free for diverse uses, like for example serving as a point for grounding, or as a point of metallic access, from where the signal can be taken to a test desk with the object of verifying the state of the lines in an automatic way.

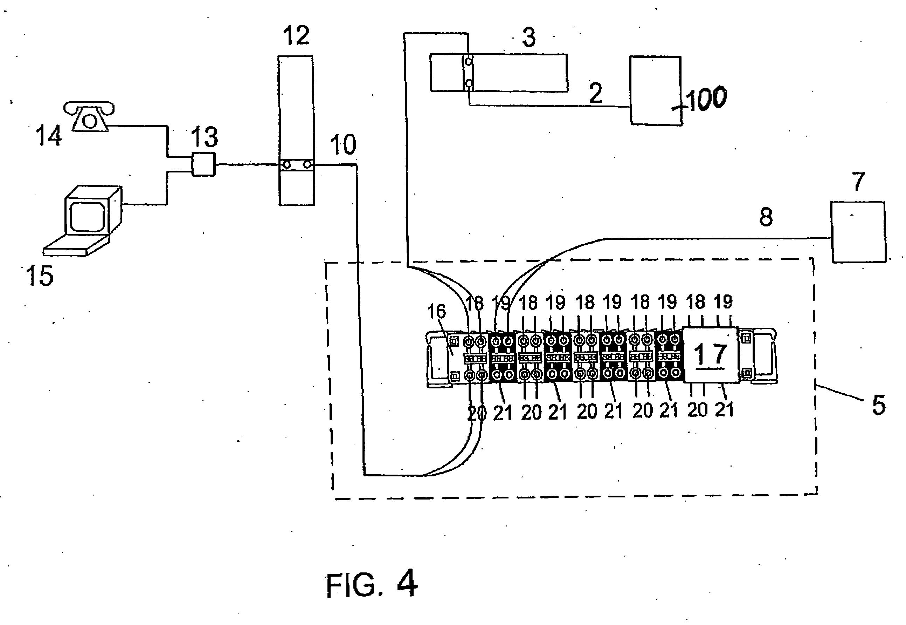

Figure 4 shows the configuration of the wiring in which the filter or splitter (17) is fitted separately from the DSLAM (7), the filter or splitter (17) being directly connected on the strip (16). Once again, it can be seen that the strip (16) is fitted in the intermediate distributor (5), the latter having a series of strips (16) which have one or more sets of four pairs of contacts, wherein each set has one free pair (21), one pair for the cables of the voice input signal (18), another for the cables of the xDSL data input signal (19), and another for the cables of the combined output signal.

Moreover, the filters (17) include some for testing (17.2) where in a manual way access is available to any of the three signals, voice, data or combined voice and data signal and the possible use of the free pair.

With the object of being able to use the free pair as metallic access leading to the test desk, it is necessary for the connection block to have the contacts in a certain way, in brief the contacts of the voice signals and the combined signal should be normally closed while the contacts of the data signal should be normally open, all this with the objective of preventing any short circuit in the extraction of the filters. This configuration allows optimum use of all the pairs that there are in the connection block (16) and in the event that the number of pairs is odd, it allows each pair to be grouped with the corresponding pair of the adjoining connection block.

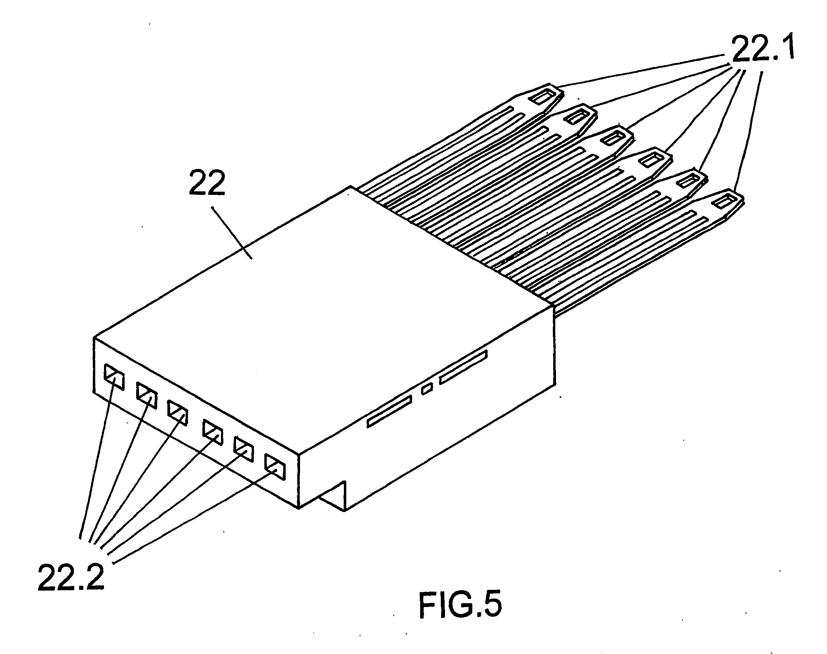

Finally it is pointed out that although a description has been made based on individual filters, the same configuration and disposition is also achieved with multi-filter modules, that is with equipment that groups the filters corresponding to several lines, as can be seen in figure 5, in which the multi-filter unit (22) has a series of contacts (22.1) and some test points (22.2), which make it possible to access manually any of the three signals, i.e. voice, data or combined voice or data signal, and the possible use of the free pair.

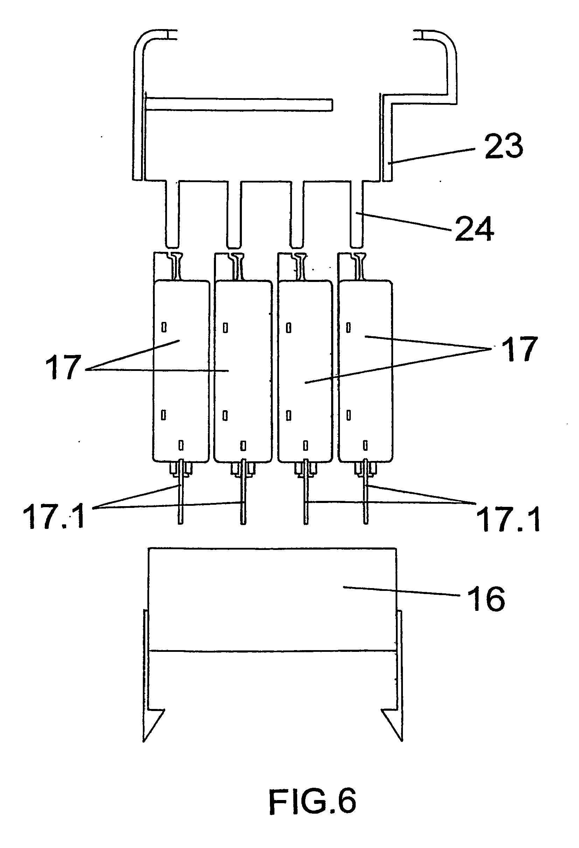

Figure 6 shows how, by means of a metal access block (23), it is possible to obtain the voice, data and combined signals, as well as the possible use of the free pair, thus making it possible to transmit these signals to a test plate where they are checked automatically. The contacts (24) of the metal access block are introduced into the test points (17.2) with which the filters (17) are provided. There can also be seen the contacts (17.1) of the filters (17) which are connected to the strips (16).

The present invention includes further improvements in the aforementioned facilities with electric filters for broadband connections, the filters designed for these facilities, as well as the connection blocks, also specially designed, to connect the filters. An object of these further improvements of the invention is to permit the use of pairs in adjoining connection blocks, instead of pairs on the same connection block, maintaining the functionality of the facilities, but considerably facilitating the wiring of the connection blocks, the voice (POTS) remaining connected to the line when the filter is removed.

In the systems hereinbefore described, amongst other characteristics, it is designed that the distribution of the contact pairs on the connection block of the intermediate distribution frame is in two rows, using two pairs of the upper row and the two opposite pairs of the lower row for the same line, so that the first two are used for the incoming voice signal and the incoming high-speed xDSL data signal respectively, whilst from the other two, one is used for the outgoing combined voice plus data signal and the other remains free for various uses, such as, for example grounding, or as point of metallic access from where the signal can be taken to a test desk with the object of verifying the state of the lines in an automatic way. This structure, although successfully reducing costs by separating the multiplexer or DSLAM from the filters, has, however, certain difficulties in the wiring, as this has to be done alternately, i.e. alternate contact pairs of one type or the other throughout a connection block, wiring which would be undoubtedly made easier if all the pairs of each line of the connection block were of the same type.

The further improvements now proposed consist of using parallel connection blocks on the intermediate distribution frame, grouped in pairs, so that, within a certain pair of connection blocks, on one of them, the incoming voice signal of the corresponding lines is established on one of the alignments of the contact pairs, and the outgoing combined voice plus data signal of each one of the lines is established on the other alignment, whilst on the second connection block, and opposite the first one, the incoming high-speed xDSL data signal is established on the contact pairs of one of its alignments, the contact pairs of its second alignment finally remaining free for grounding, as a point of metallic access or for any other auxiliary application. This means that the pins of each filter, instead of being positioned in a coplanar form, can have a parallel arrangement, at a distance coinciding with that between connection blocks, in the mounting thereof on the intermediate distribution frame.

A preferred embodiment of this arrangement will now be described by way of example, with reference to the accompanying drawings wherein:

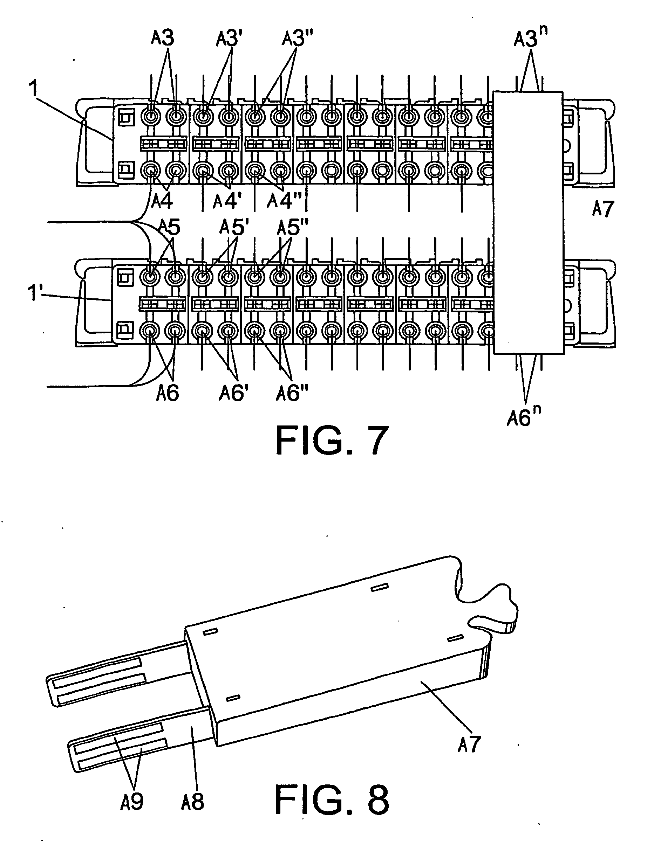

Figure 7 shows, in schematic front elevation, the connection blocks according to the present further improvements of the invention, wherein one of the individual filters, corresponding to a line, is implanted;
Figure 8 shows in perspective one of the individual filters to be implanted in any of the lines established in the pair of connection blocks of figure 7; and

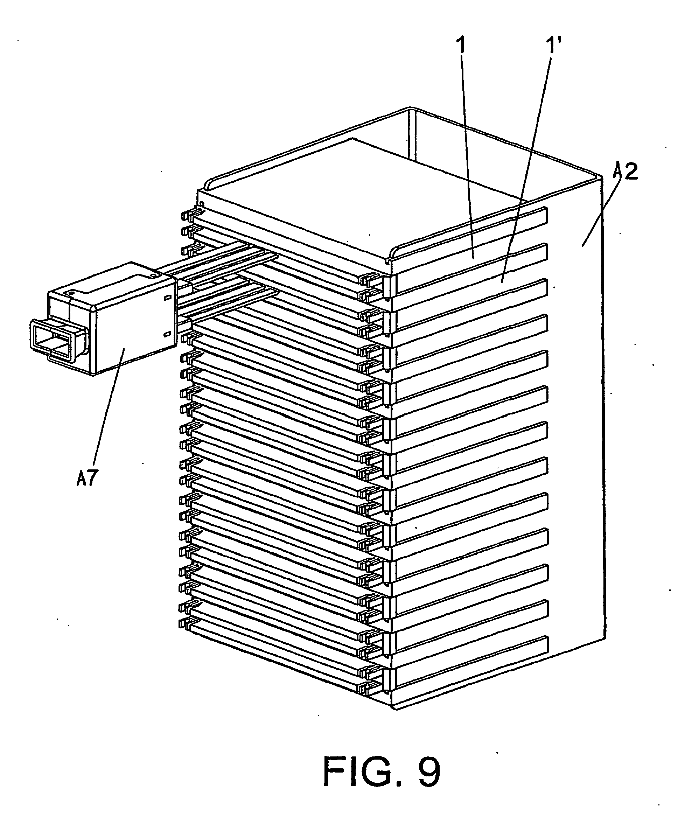

Figure 9 shows in schematic perspective an intermediate distribution frame with its connection blocks and one of its filters.

In the light of said figures, we can observe how the connection blocks (1) that form part of the intermediate distribution frame (A2), are arranged parallel to each other and grouped in pairs, as is shown in figure 7. This allows that both connection blocks (1-1') belonging to the same pair are functionally integrated, establishing, on each one of them, the first alignment of contact pairs (A5), (A5'), (A5"), ... (A5ⁿ), used, for example, for the incoming voice signal of the respective lines, and another longitudinal alignment of contact pairs (A6), (A6'), (A6") ... (A6ⁿ), used, for example, for the outgoing combined voice plus data signal. At the same time, on the second connection block (1'), a first alignment of contact pairs (A3), (A3'), (A3") ... (A3ⁿ) is established, used, for example, for the incoming high-speed xDSL data signal, and finally, another alignment of contact pairs (A4), (A4'), (A4")...(A4ⁿ) can remain free, acting as grounding or point of metallic access from where the signal can be taken to a test desk with the purpose of verifying the state of the lines in an automatic way. This means, as stated above, that the connections in the contact pairs (A5) are all identical, corresponding to the different lines, as occurs with the contact pairs (A6), with the contact pairs (A3) and with the contact pairs (A4), with no other determining factor than that of the lines being independent, which considerably facilitates the wiring. In accordance with this arrangement for the connection blocks (1-1'), each filter (A7) can simultaneously be mounted on two parallel connection blocks (1-1'), as is particularly observed in figure 8, for which purpose the pins (A8) of the filter, each one equipped with a pair of terminals (A9) in the example in figure 8 or with 3 terminals in the example in figure 9, are arranged parallel, so that one of them is plugged in between the contacts (A5) and (A6) of one of the connection blocks (1') and the other between the contact pairs (A3) and (A4) of the other connection block (1), as is also observed in figure 9.

It is not considered necessary to expand this description further for any person skilled in the matter to understand the scope of the invention and the advantages that are derived therefrom. The materials, form, size and arrangement of the structural elements are capable of variation provided they do not alter the essential nature of the invention.

## Claims

1. Signal transmission apparatus with electric filters for broadband connections, wherein a voice signal (2), which is obtained from a switching system (100), reaches a horizontal connection block (3), from which there extends a voice jumper (4), which extends to a connection block (16) on an intermediate distribution frame (5), where the voice signal is combined with a separately-generated data signal arriving on a data signal line, and from which intermediate distribution frame the combined signal is transmitted by means of a jumper (11) to a vertical connection block (12) and from there to a filter (13) which transmits the appropriate part of the combined signal either to a telephone (14) or to a computer (15) of a user, and wherein pairs of contacts (18, 19, 20, 21) for input and output wire pairs, to be connected to the connection block (16) of the intermediate distribution frame (5) in use, have removably connected between at least some of the said pairs in use filter contacts (17.1, 22.1) of filter devices (17, 22) at least partly external to the connection block (16) and wherein one or more connection blocks (16; 1, 1') is or are arranged to provide a series of grouped contact pairs connectable so that for each four contact pairs one pair remains free, and remaining pairs are respectively connectable to the voice signal, the data signal, and the combined signal, the contact pair (18) of the voice signal is connected to the contact pair (20) of the combined voice/data signal by normally closed filter-receiving contacts capable of receiving therebetween the said filter device contacts (17.1, 22.1), whilst the contact pair (19) of the data signal and the free contact pair (21) are connected to normally open filter-receiving contacts capable of receiving therebetween the said filter device contacts, so that when the filter contacts are inserted between the respective filter-receiving contacts, the free contact pair can be used as a point of metallic access to obtain a signal and lead it to a test desk, and the filter devices (17, 22) have a test jumper (17.2, 22.2) which allows access in a manual way to the voice signal, the data signal, the combined voice and data signal and to the possible use of the free pair.

2. Signal transmission apparatus according to Claim 1, **characterised in that** the filter devices are formed to project externally from the connection block (16) of the intermediate distribution frame (5), and each filter device has a series of contacts (17.1) facing the openings of the contacts of the connector pairs for the voice signal, the combined voice and data signal, the data signal, and the possible use of the free pair, the filter unit preferably also including means of protection against over-voltages and over-currents.

3. Signal transmission apparatus according to any of preceding Claims, **characterised in that** the connection blocks (1, 1') of the intermediate distribution frame (A2) are grouped in parallel, functionally complimentary pairs so that on a first one of said connection blocks (1'), the contact pairs (A5), (A5'), (A5"), ... (A5ⁿ) are used for the incoming voice signal, corresponding to the different lines assisted by the pair of connection blocks, and opposite the contact pairs (A6), (A6'), (A6") ... (A6ⁿ), are used for the outgoing combined voice + data signal, whilst on the other connection block(1), and facing the first one, the contact pairs (A3), (A3'), (A3") ... (A3ⁿ), are used for the incoming data signal, and the contact pairs (A4), (A4'), (A4") ... (A4ⁿ), which remain free as points of metallic access, are arranged so that each filter (A7) acts simultaneously on both combined connections blocks (1-1').

4. Signal transmission apparatus according to Claim 3, **characterised in that** each filter (A7) is individual for each line and incorporates its contacts (A9), established on two substantially parallel pins (A8) at substantially the same separation distance as that between the relevant contacts of the respective connection blocks (1-1').

5. Signal transmission apparatus according to Claim 3 or 4, **characterised in that** the connection blocks each have an odd number of contact pairs, so that each pair can be used in conjunction with a corresponding contact pair of a similar connection block when positioned adjacent thereto in use.

6. Signal transmission apparatus according to any preceding claim, **characterised in that** the free contact pair (21) is used as a point for grounding.

## Patentansprüche

1. Signalübertragungsvorrichtung mit elektrischen Filtern für Breitbandverbindungen, wobei ein Sprachsignal (2), das von einem Vermittlungssystem (100) erlangt wird, einen horizontalen Verbindungsblock (3) erreicht, von wo aus sich eine Sprachbrücke (4) erstreckt, die sich bis zu einem Verbindungsblock (16) an einem Zwischenkanalverteiler (5) erstreckt, wo das Sprachsignal mit einem gesondert erzeugten Datensignal kombiniert wird, das auf einer Datensignalleitung ankommt, und wobei das kombinierte Signal von dem Zwischenkanalverteiler aus mit Hilfe einer Brücke (11) zu einem vertikalen Verbindungsblock (12) und von dort aus zu einem Filter (13) übertragen wird, der den entsprechenden Teil des kombinierten Signals entweder zu einem Telefon (14) oder zu einem Rechner (15) eines Anwenders überträgt, und wobei Paare von Kontakten (18, 19, 20, 21) für Eingangs- und Ausgangsleiterpaare, die bei Anwendung mit dem Verbindungsblock (16) des Zwischenkanalverteilers (5) zu verbinden sind, abnehmbar zwischen wenigstens einigen der Paare bei Anwendung Filterkontakte (17.1, 22.1) von Filterbausteinen (17, 22) angeschlossen haben, die wenigstens teilweise außerhalb des Verbindungsblocks (16) liegen, und wobei ein oder mehrere Verbindungsblöcke (16; 1, 1') so angeordnet ist oder sind, dass eine Reihe von gruppierten Kontaktpaaren bereitgestellt wird, die so angeschlossen werden können, dass für jeweils vier Kontaktpaare ein Paar freibleibt, und die verbleibenden Paare jeweils an das Sprachsignal, das Datensignal und das kombinierte Signal angeschlossen werden können, wobei das Kontaktpaar (18) des Sprachsignals mit dem Kontaktpaar (20) des kombinierten Sprach-/Datensignals verbunden ist, durch Filteraufnahme-Ruhekontakte, die dazu in der Lage sind, zwischen denselben die Filterbausteinkontakte (17.1, 22.1) aufzunehmen, während das Kontaktpaar (19) des Datensignals und das freie Kontaktpaar (21) mit Filteraufnahme-Arbeitskontakten verbunden sind, die dazu in der Lage sind, zwischen denselben die Filterbausteinkontakte aufzunehmen, so dass, wenn die Filterkontakte zwischen den jeweiligen Filteraufnahmekontakten eingesteckt sind, das freie Kontaktpaar als ein Punkt des metallischen Zugriffs verwendet werden kann, um ein Signal zu erlangen und es zu einem Prüftisch zu leiten, und die Filterbausteine (17, 22) eine Prüfbrücke (17.2, 22.2) haben, die auf eine manuelle Weise einen Zugriff auf das Sprachsignal, das Datensignal, das kombinierte Sprach- und Datensignal und auf die mögliche Verwendung des freien Paares erlaubt.

2. Signalübertragungsvorrichtung nach Anspruch 1, **dadurch gekennzeichnet, dass** die Filterbausteine so geformt sind, dass sie von dem Verbindungsblock (16) des Zwischenkanalverteilers (5) aus nach außen vorspringen, und jeder Filterbaustein eine Reihe von Kontakten (17.1) hat, die den Öffnungen der Kontakte der Verbinderpaare für das Sprachsignal, das kombinierte Sprach- und Datensignal, das Datensignal und die mögliche Verwendung des freien Paares gegenüberliegen, wobei die Filtereinheit vorzugsweise ebenfalls Mittel zum Schutz gegen Überspannungen und Überströme einschließt.

3. Signalübertragungsvorrichtung nach einem der vorhergehenden Ansprüche, **dadurch gekennzeichnet, dass** die Verbindungsblöcke (1, 1') des Zwischenkanalverteilers (A2) in parallelen, funktionell komplementären Paaren gruppiert sind, so dass an einem ersten der Verbindungsblöcke (1`) die Kontaktpaare (A5), (A5'), (A5"), ... (A5ⁿ) für das ankommende Sprachsignal verwendet werden, entsprechend den unterschiedlichen Leitungen, die durch das Paar von Verbindungsblöcken unterstützt werden, und gegenüber die Kontaktpaare (A6), (A6'), (A6"), ... (A6ⁿ) für das abgehende kombinierte Sprach- und Datensignal verwendet werden, während an dem anderen Verbindungsblock (1) und gegenüber dem ersten Block, die Kontaktpaare (A3), (A3`), (A3"), ... (A3ⁿ) für das ankommende Datensignal verwendet werden und die Kontaktpaare (A4), (A4'), (A4"), ... (A4ⁿ), die als Punkte des metallischen Zugriffs freibleiben, so angeordnet sind, dass jeder Filter (A7) gleichzeitig auf beide kombinierte Verbindungsblöcke (1, 1`) einwirkt.

4. Signalübertragungsvorrichtung nach Anspruch 3, **dadurch gekennzeichnet, dass** jeder Filter (A7) für jede Leitung einzeln ist und seine Kontakte (A9) einschließt, hergestellt an zwei im Wesentlichen parallelen Stiften (A8) in im Wesentlichen dem gleichen Trennungsabstand wie derjenige zwischen den passenden Kontakten der jeweiligen Verbindungsblöcke (1,1').

5. Signalübertragungsvorrichtung nach Anspruch 3 oder 4, **dadurch gekennzeichnet, dass** die Verbindungsblöcke jeder eine ungerade Anzahl von Kontaktpaaren haben, so dass jedes Paar in Verbindung mit einem entsprechenden Kontaktpaar eines ähnlichen Verbindungsblocks verwendet werden kann, wenn es bei Anwendung an dasselbe angrenzend angeordnet wird.

6. Signalübertragungsvorrichtung nach einem der vorhergehenden Ansprüche, **dadurch gekennzeichnet, dass** das freie Kontaktpaar (21) als ein Punkt zur Erdung verwendet wird.

## Revendications

1. Dispositif de transmission de signaux, comportant des filtres électriques pour des connexions à large bande, dans lequel un signal vocal (2), transmis par un système de commutation (100), atteint une bloc de connexion horizontal (3), à partir duquel s'étend un fil d'interconnexion vocal (4), s'étendant vers un bloc de connexion (16) sur un répartiteur intermédiaire (5), le signal vocal étant combiné avec un signal de données à génération séparée arrivant sur une ligne de signaux de données, le signal combiné étant transmis à partir de ce répartiteur intermédiaire par l'intermédiaire d'un fil d'interconnexion (11) vers un bloc de connexion vertical (12), et de celui-ci vers un filtre (13), transmettant la partie appropriée du signal combiné vers un téléphone (14) ou vers un ordinateur (15) d'un utilisateur, des paires de contacts (18, 19, 20, 21) pour des paires de fils d'entrée et de sortie, devant être connectés en service au bloc de connexion (16) du répartiteur intermédiaire (5), ayant été connectées en service de manière amovible entre au moins certaines desdites paires de contacts des filtres (17.1, 22.1) de dispositifs de filtre (17, 22), au moins partiellement externes au bloc de connexion (16), et dans lequel un ou plusieurs blocs de connexion (16 ; 1, 1') est ou sont agencé(s) de sorte à établir une série de paires de contacts groupées, pouvant être connectées de sorte que sur quatre paires de contacts, une paire reste libre, les paires restantes pouvant respectivement être connectées au signal vocal, au signal de données et au signal combiné, la paire de contacts (18) du signal vocal étant connectée à la paire de contacts (20) du signal vocal/de données combiné par des contacts de réception des filtres normalement fermés, capables de recevoir entre eux les contacts dudit dispositif de filtre (17.1, 22.1), la paire de contacts (19) du signal de données et la paire de contacts libre (21) étant connectées à des contacts de réception des filtres normalement ouverts, capables de recevoir entre eux lesdits contacts du dispositif de filtre, de sorte que lorsque les contacts des filtres sont insérés entre les contacts de réception des filtres respectifs, la paire de contacts libre peut être utilisée comme point d'accès métallique pour produire un signal et le transmettre vers une table d'essai, les dispositifs de filtre (17, 22) comportant un fil d'interconnexion d'essai (17.2, 22.2), permettant l'accès manuel au signal vocal, au signal de données, au signal vocal et de données combiné et à une utilisation possible de la paire libre.

2. Dispositif de transmission de signaux selon la revendication 1, **caractérisé en ce que** les dispositifs de filtre sont formés de sorte à déborder vers l'extérieur du bloc de connexion (16) du répartiteur intermédiaire (5), chaque dispositif de filtre comportant une série de contacts (17.1) faisant face aux ouvertures des contacts des paires de contacts pour le signal vocal, le signal vocal et de données combiné, le signal de données et une utilisation possible de la paire libre, l'unité de filtre englobant de préférence en outre un moyen de protection contre des surtensions et des surintensités.

3. Dispositif de transmission de signaux selon l'une quelconque des revendications précédentes, **caractérisé en ce que** les blocs de connexion (1, 1') du répartiteur intermédiaire (A2) sont groupés en des paires parallèles, fonctionnellement complémentaires, de sorte que sur un premier bloc desdits blocs de connexion (1'), les paires de contacts (A5), (A5'), (A5"), ... (A5ⁿ) sont utilisées pour le signal vocal rentrant, correspondant aux différentes lignes assistées par la paire de blocs de connexion, les paires de contacts opposées (A6), (A6'), (A6") ... (A6ⁿ) étant utilisées pour le signal vocal et de données combiné sortant, tandis que sur l'autre bloc de connexion (1), faisant face au premier bloc, les paires de contacts (A3), (A3 ')n, (A3")... (A3ⁿ), sont utilisées pour le signal de données rentrant, les paires de contacts (A4), (A4'), (A4") .. (A4ⁿ), restant libres en tant que points d'accès métallique, étant agencées de sorte que chaque filtre (A7) agit simultanément sur les deux blocs de connexion combinés (1-1').

4. Dispositif de transmission de signaux selon la revendication 3, **caractérisé en ce que** chaque filtre (A7) est individuel pour chaque ligne, et incorpore ses contacts (A9), établis sur deux broches pratiquement parallèles (A8), à une distance de séparation pratiquement égale à celle entre les contacts correspondants des blocs de connexion respectifs (1-1').

5. Dispositif de transmission de signaux selon les revendications 3 ou 4, **caractérisé en ce que** les blocs de connexion comportent chacun un nombre impair de paires de contacts, de sorte que chaque paire peut être utilisée en combinaison avec une paire de contacts correspondante d'un bloc de connexion similaire, lors d'un positionnement adjacent à celui-ci en service.

6. Dispositif de transmission de signaux selon l'une quelconque des revendications précédentes, **caractérisé en ce que** la paire de contacts libre (21) est utilisée comme un point pour la mise à la masse.
